# EUROPEAN PATENT SPECIFICATION

(11) **EP 2 760 802 B1**
(45) Date of publication and mention of the grant of the patent: **26.12.2018**
(21) Application number: 12784699.6
(22) Date of filing: 26.09.2012
(51) Int. Cl.: C04B 26/02, C04B 28/32

(54) **METHOD OF OBTAINING A BINDER FOR MANUFACTURING OF CONCRETE OR STRATIFIED PRODUCTS**
VERFAHREN ZUM ERHALTEN VON BINDEMITTELN ZUR HERSTELLUNG VON BETON ODER LAMINIERTEN PRODUKTEN
MÉTHODE D'OBTENIR UN LIANT POUR LA FABRICATION DE BÉTON OU DE PRODUITS STRATIFIÉS

(30) Priority: 26.09.2011 IT MO20110244
(43) Date of publication of application: 06.08.2014
(73) Proprietor: Canti, Max, 61012 Gradara (PS) (IT)
(72) Inventor: Canti, Max, 61012 Gradara (PS) (IT)
(74) Representative: Bergamini, Silvio
(86) International application number: PCT/IB2012/055117
(87) International publication number: WO 2013/061182

(56) References cited:
- WO-A1-92/17414
- WO-A2-2008/063904
- FR-A- 369 317
- US-A- 4 036 656
- US-A1- 2007 017 418

## Description

### Field of the invention

The invention relates to method for obtaining a binder for manufacturing of concrete or stratified products.

### Background art

In the fabrication of particle-based or laminated products, binders are known to be used for binding together wood particles to form particle boards and panels, MDFs, plywood panels, oriented strand boards, blockboards, etc., containing urea-formaldehyde, phenol-formaldehyde, melamine-formaldehyde.

These materials bind the particles or layers to be laminated, when the particle-based products obtained using the above materials are subjected to the combined actions of pressure and heat.

Alternatively, a two-component polyurethane binder is known to be used, which may spontaneously cure at room temperature or undergo accelerated curing by being subjected to the action of microwaves or radio-frequency, when it is already laminated but has not been pressed yet, with the laminated assembly being later subjected to a pressure action.

Generally, these binders are substantially divided into two classes, namely a class comprising those that form non-water resistant particle-based or laminated products and a class designed for water-resistant products.

The latter include the most widely used binders, phenol-formaldehyde and melamine-formaldehyde.

In addition, two-component or one-component polyurethane (diisocyanate) may be used, which is water-resistant but is less used for cost reasons.

The two- or one-component polyurethane uses as a second component the residual moisture contained in the wood to be bound and the one absorbed from air in the open steps of mixing and laminating the assembly to be pressed.

Non-water resistant binders are urea-formaldehyde and vinyl adhesives: the latter are less used due to their easy reversibility with moisture.

A further discrimination in the use of binders is given by cost, and according to this parameter the less expensive binder is urea-formaldehyde, which is the most widely used for making interior furniture panels.

Conversely, those that ensure high water resistance have a very high cost, and include melamine-formaldehyde, phenol-formaldehyde, two- and one-component polyurethane.

The binders used in combination with formaldehyde, which is known to be a carcinogenic material, give off free formaldehyde, because the latter, in addition to being naturally contained in tree wood, is used in excess amounts for quicker curing of binders, to improve throughput at each production site.

The binders combined with two-component polyurethane, in addition to their above mentioned high cost, are dangerous, in case of fire or upon disposal by burning, at the end of their life, because at a combustion temperature of 500°C and more, they generate cyanide, a highly poisonous and paralyzing substance.

In prior art, no significant progress has been achieved for some time, and all the particle-based products derived from current industrial processes are mainly manufactured using formaldehyde as a binder.

For example, in the manufacture of decorative high-pressure plastic laminates, the thicker substrate is formed using multiple sheets of Kraft paper impregnated with phenol-formaldehyde, and the decorative surface layer is formed by interleaving first a barrier sheet, to prevent color alteration by phenol, and then a decorative paper sheet, having a single color or printed generally with wood texture, impregnated with melamine-formaldehyde.

In prior art low-pressure laminates are also used, which are formed in continuous rolls.

In practice, these low-pressure laminate products are made of paper impregnated of melamine-formaldehyde.

In order to make other particle-based or laminated products in which no wood or paper is used, such as stone conglomerates, binders are used that comprise polyester resins in combination with styrene monomer, or acrylic resins.

Here again, polyester resins combined with styrene monomer are the most widely used binders, for their lower cost, in spite of their considerable environmental impact caused by styrene emissions, with styrene being used in amounts exceeding stoichiometric amounts, to be combined with polyester for fluidizing and carrying the binder in the mixture.

Styrene monomer is also known to be at least as carcinogenic as benzene.

From FR369317 a method for production of cements to conglomerate powdered or granular materials is known.

The method comprises to obtain a solid compound by mixing together magnesium, a calcium and casein sulphate, to which a certain amount of silicium and a little amount of metallic salts are added.

To the mixture are further added minium or its drivates, and a liquid compound made of a solution of magnesium chloride and a very diluted solution of sulphuric acid, to which it has been added a little amount of albumine and tragacanth.

From US4,036,656 a foamed mastic composition, buildings articles coated therewith and a method of preparing the same are known.

The mastic composition comprises a magnesia cement, building articles coated therewith in light porous foamed form having improved fire resistant and sound insulating properties, and a method of preparing such articles and composition.

The foamed mastic composition is pumpable and sprayable and upon setting or dryingprovides a high porous, firmly bonded coating upon metallic building members.

From US2007/0017418 a magnesium cementitious composition for appplications such as stucco, plaster coating, fireproof coatings, castings/molding application and flooring is known.

The product is a blend of magnesium oxide and magnesium chloride. Suitable fillers such as bottom ash, fly ash, clinker and other pulverized materials may be added. Fibrous materials, foaming agents and surfactants may also be added to achieve product characteristics for specific applications. Also a process for blending the selected ingredients is disclosed.

From WO2008/063904 a magnesium oxichloride cementis known.

It is formed by mixing a magnesium chloride brine solution with a magnesium oxide composition in a selected stoichiometric ratio of MgCl₂ MgO and H₂O tthat forms the 5 phase magnesium oxychloride cement composition. The inventive systems and methods provide for controlling the cement kinetics to form the five phase mgnesium oxychloride cement composition and results in an improved and stable cement composition. Various fibers can be optionally added to form preferred cement materials for users as diverse such as road stripping, fire-proofing, fire barriers, cement repair, and mortar.

From WO92/17414 magnesium oxychloride compositions and methods for manufacture and use are known.

The compositions, products and uses thereof are provided by mixing a magnesium oxide composition, a megnesium chloride brine solution, and aggregate particles. The cement composition are adapted for use in repairing damaged concrete surfaces, casting both functional and decortive forms, and coating surfaces with stucco. The addition of a small amount of acid may be added to the cement composition to promote a more complete cementing reaction. The resulting cement product exhibits substantially increased strength and water resistance. Brine from the Great Salt Lake is a preferable source of the magnesium chloride brine solution. Brine from Great Salt Lake, which contains various mineral impurities, results in a cement composition substantially stronger than cement produced from a pure magnesium chloride brine solution.

### Objects of the invention

One object of the invention is to provide a method for obtaining a novel non-toxic binder,
that has no emissions and no toxicity, is also resistant to weather and to long heat-stress treatments, such as boiling, has a low cost, as a non-oil derivative, and is also environment-friendly, because the products obtained using the inventive binder may be ground to powder for end-of-life disposal and spread on the fields as a fertilizer or a mineral supplement for crops.

The binder obtained by the method of the invention may be a substitute for prior art water-resistant binders, although it has a low cost, similar to that of urea-formaldehyde, while differing from the latter for its lack of toxicity and its considerably better physical and mechanical properties.

The invention relates to a method for making a binder for making particle-based or laminated products as defined in the features of claim 1.

Therefore, the invention affords the following advantages:
providing a binder that can be quickly heated even using microwave or radio-frequency heating devices;
providing a binder that has no emissions and no toxicity, is also resistant to weather and to long heat-stress treatments, such as boiling, has a low cost, and is a non-oil derivative and hence is environment-friendly,
providing particle-based or laminated products that may be ground to powder for end-of-life disposal and spread on the fields as fertilizers or mineral supplements for crops;
replacing prior art water-resistant binders, at a low cost, similar to that of urea-formaldehyde, while affording lack of toxicity and considerably better physical and mechanical properties;
providing a binder that can be used for binding and laminating stone aggregates;
obtaining particle-based or laminated products in the form of safe, non-carcinogenic fire barrier panels;
providing a binder that can be used to make insulating plasters, by mixing it with sand and other expanded inorganic inert materials, such as pearlite, pumice, vermiculite, expanded porous glass, cellites;
providing a binder that can be used for form stone agglomerates or laminates containing quartz, recycled glass, grog, marble;
providing a binder that can be used in the support layers of decorative plastic laminates, to reduce the free formaldehyde content thereof;
obtaining plywood and laminate elements formed from wood sheets, without using the carcinogenic free formaldehyde.

### Brief description of the figures

Further characteristics and advantages of the invention will be more apparent upon reading of the description of an embodiment of a binder for making particle-based or laminated products, as shown by way of example and without limitation in the annexed pictures, which are obtained using the scanning electron microscope Philips SEM XL20, wherein:

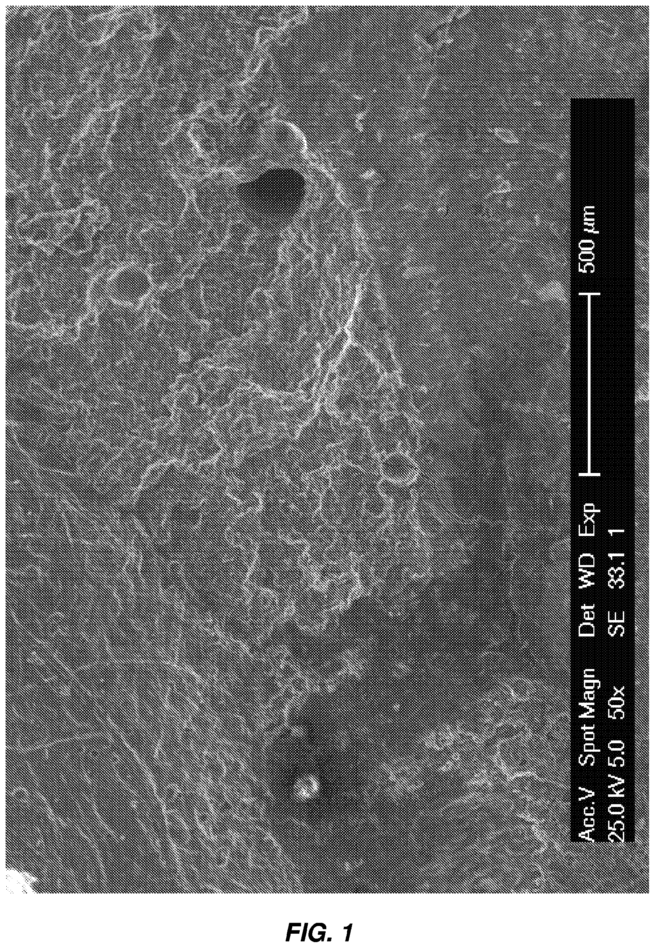

Figure 1 is a view of a microstructure of a traditional soy-free binder, at 50x magnification;

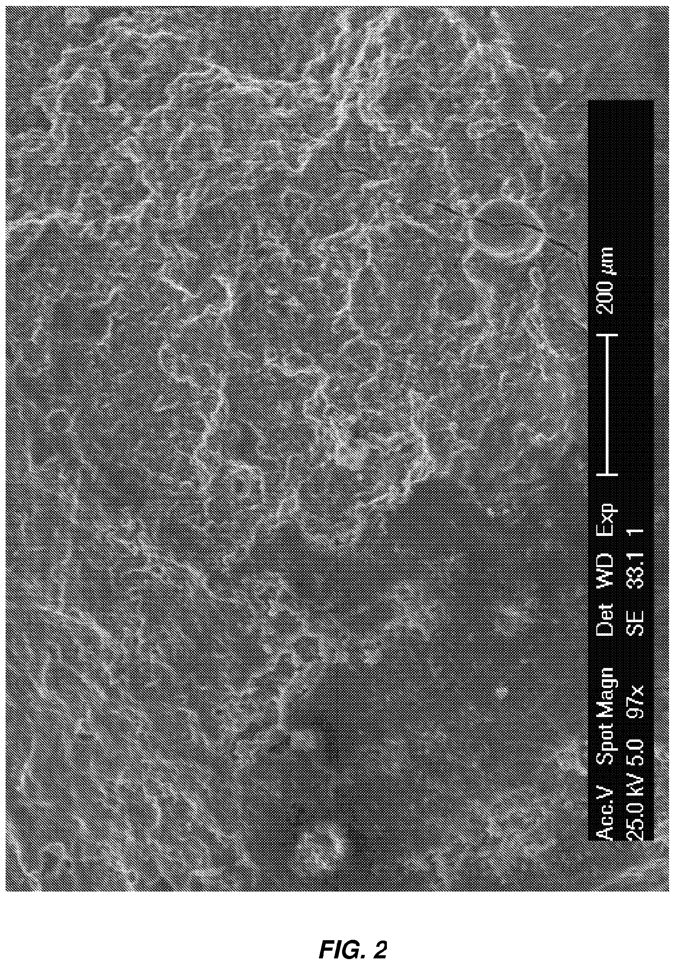

Figure 2 is a view of the microstructure of Figure 1, at 100x magnification;

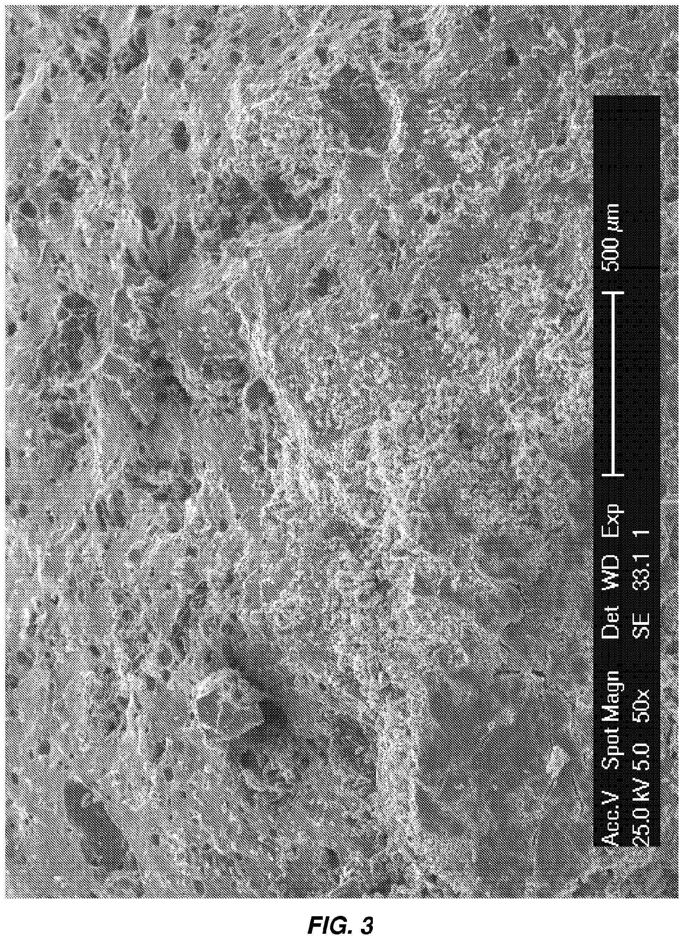

Figure 3 is a view of a microstructure of a binder of the invention, containing 25% soy, at 50x magnification;

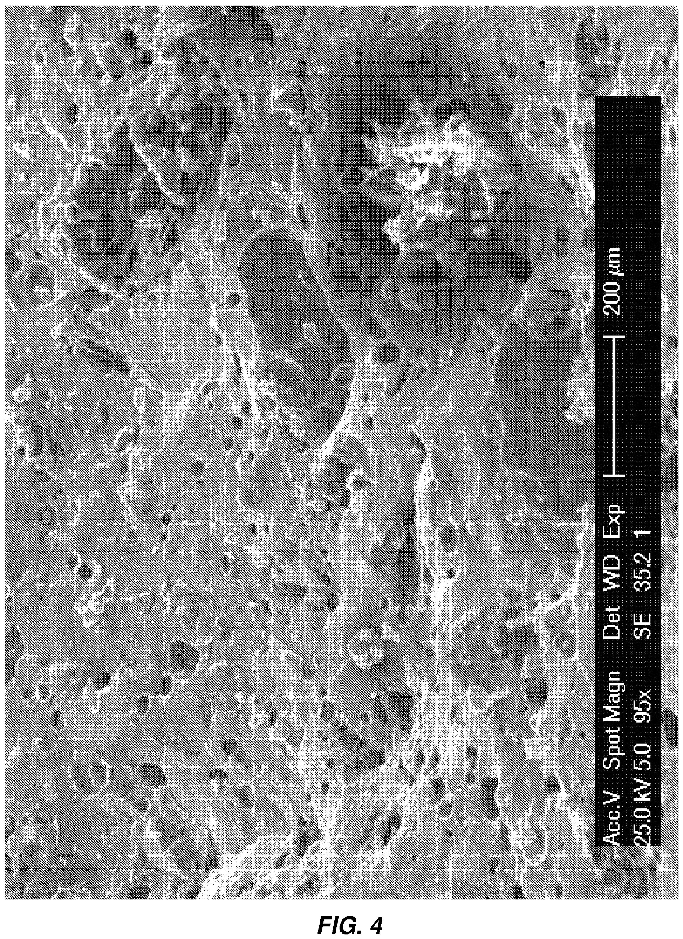

Figure 4 is a view of the microstructure of Figure 3, at 100x magnification;

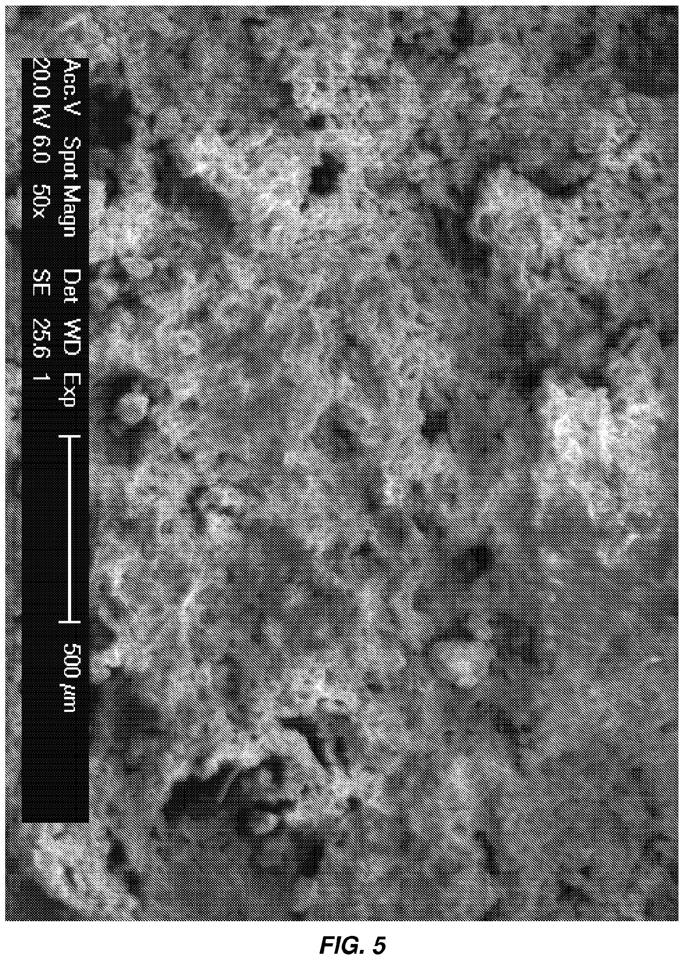

Figure 5 is a view of a microstructure of a binder of the invention, containing 50% soy, at 50x magnification;

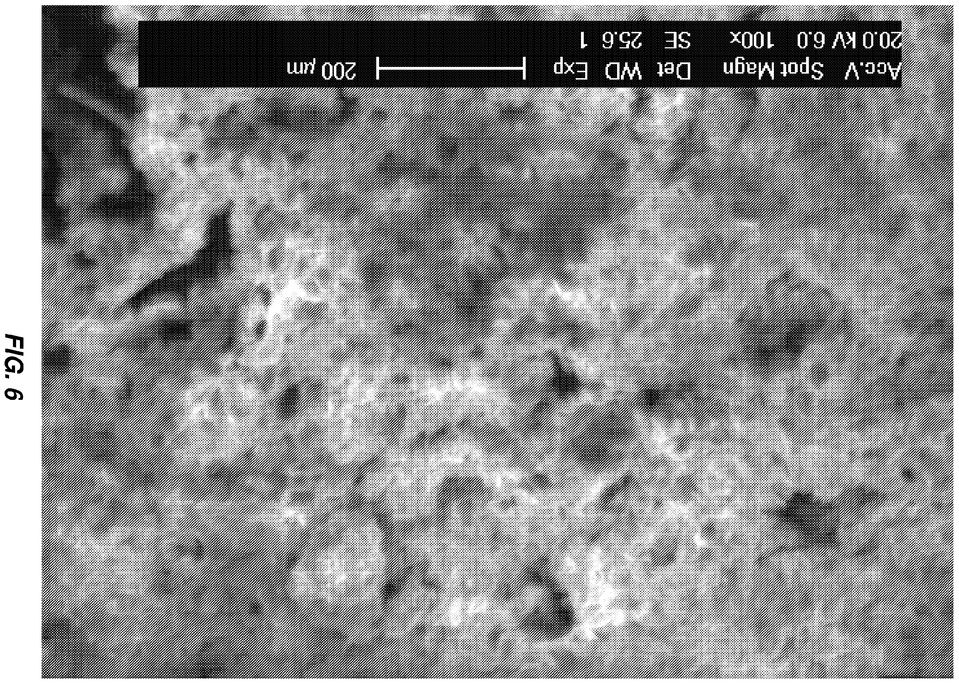

Figure 6 is a view of the microstructure of Figure 5, at 100x magnification;

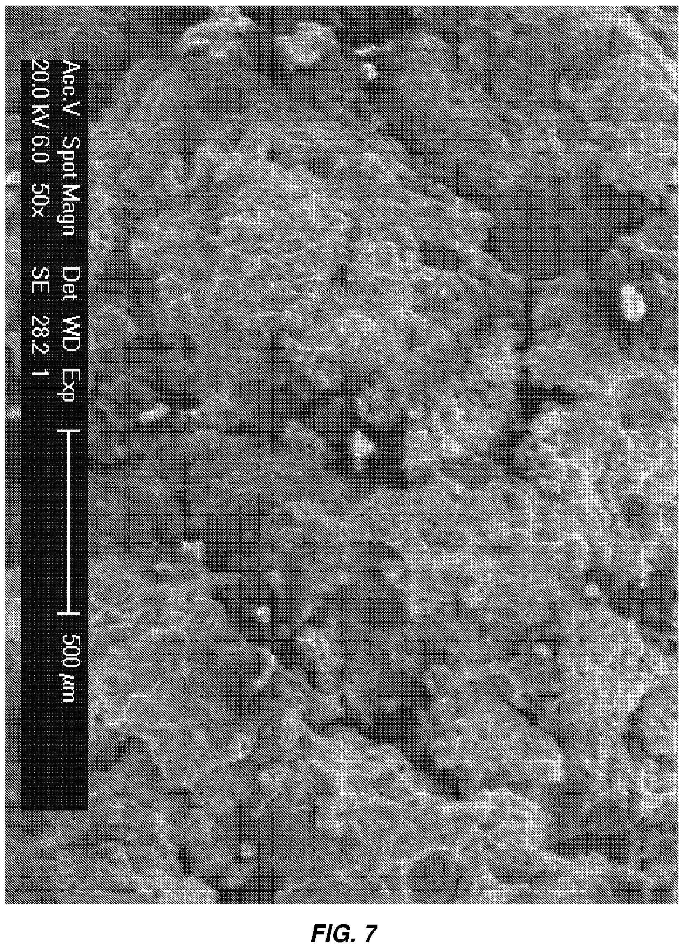

Figure 7 is a view of a microstructure of a binder of the invention, containing 75% soy, at 50x magnification;

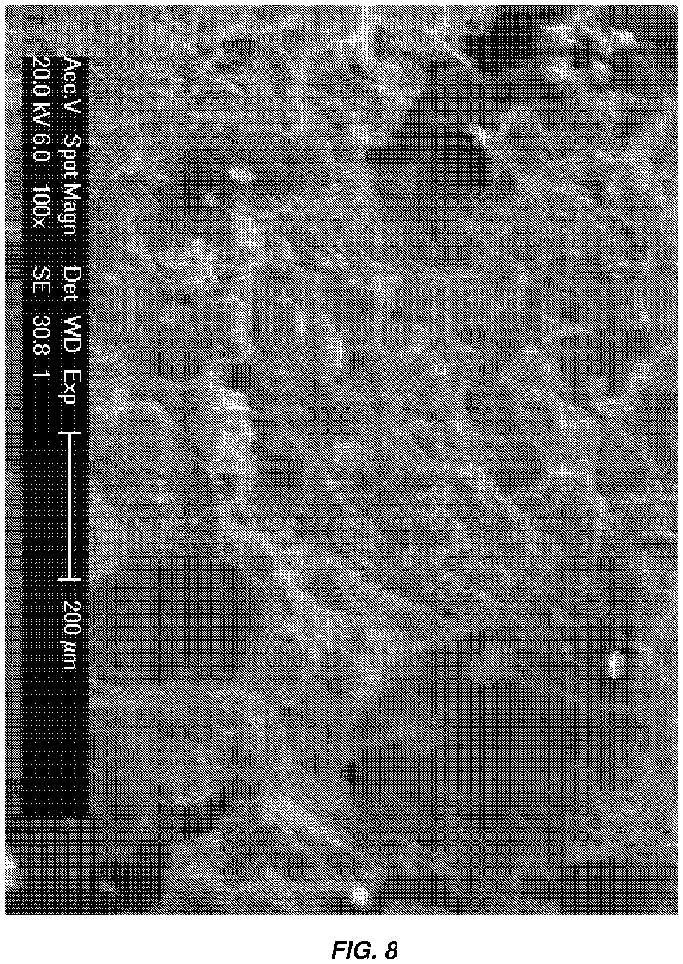

Figure 8 is a view of the microstructure of Figure 7, at 100x magnification.

### Detailed description of a preferred embodiment

In the method of the invention the binder is obtained by mixing different amounts of at least three components, briefly designated by A, B, C hereinafter.

The component A is a soybean flour, whereas the component B comprises magnesium oxide and the component C comprises a magnesium chloride or magnesium sulfate solution at 32° Bè (15°C).

A water amount is later added to the mixture of these components A, B, C, for fluidizing the binder.

For optimized efficiency in the fabrication of the binder of the invention, a minimized amount of water should be added to the mixture of the components A, B, C, to avoid the energy consumption required for eliminating it from the particle-based or laminated products so obtained.

The ratio of the component B and the solution C by weight is 1:1.

The component B will be referred to hereinafter, for simplicity, as involving the presence of the component C in the ratio as mentioned above.

The binder obtained by the method of the invention may afford rigid binding, and provide particle-based or laminated products that are resistant to fire and prolonged boiling.

The component B is largely prevalent in the binder mixture, as it falls in the range from 70% to 95%, whereas the component A falls in a range from 5% to 30%.

It shall be noted that in the method of the invention the binder of the invention should be prepared substantially at the time of use, as it also cures at room temperature, within about 24 hours.

Such preparation should occur by first mixing together magnesium oxide and soybean flour powders, and then hydrating the mixture obtained with the component C, i.e. the magnesium chloride or magnesium sulfate solution at 32° Bé (15°C), or a free combination of both in the above mentioned ratios, and by adding water to an amount that can form a fluid, free-flowing and sprayable paste.

If an excess amount of the component A, i.e. the soybean flour, is provided during preparation of the mixture of components, there may be added small amounts of copper sulfate or carbon sulfide or magnesium or zinc or aluminum fluorosilicate, aluminum sulfate or other animal-safe antiseptic products.

The fluidized binder so obtained may be added to the particles to be bound in mixers, or sprayed into an airstream that carries a known amount of particles, when the latter have a light weight, like in the case of wood chips or fiber flakes.

The fluid binder may be also spread on the layers to be laminated to obtain plywood or laminates, using a metering roller.

The fluid binder may be coated, for instance, by dipping the paper to be impregnated or the peeled wood sheets to form laminated products and by straining it between two pressure rollers.

The above disclosed invention was found to fulfill the intended objects.

## Claims

1. A method for obtaining a binder for manufacturing of concrete or stratified products, comprising the following mixing sequence:
- (a) mix preliminarily together 5-30% of a first component A and 70-95 % of a second component B;
- (b) add a third component C in a ratio of 1:1 by weight to the second component B;
- (c) add water in an amount that can form a fluid, free-flowing and sprayable paste;
- Wherein the first component A is a soybean flour; component B is a magnesium oxide and the third component C is a magnesium sulphate or chloride solution at 32°Be (at 15°).

2. The method as claimed in claim 1, wherein it comprises to prepare the mixing sequence at the time of use.

3. The method as claimed in anyone of preceding claims, wherein it further comprises to add said binder to a known amount of particles to be bound.

## Patentansprüche

1. Verfahren zum Erhalten eines Bindemittels zur Herstellung von Beton oder geschichteten Produkten, umfassend die folgende Mischreihenfolge:
- (a) vorausgehendes miteinander Vermischen von 5-30% einer ersten Komponente A und 70-95% einer zweiten Komponente B;
- (b) Zugeben einer dritten Komponente C in einem Gewichtsverhältnis von 1:1 zur zweiten Komponente B;
- (c) Zugeben von Wasser in einer Menge, die eine fluide, fließfähige und spritzbare Paste bilden kann;
- Wobei die erste Komponente A ein Sojamehl ist; Komponente B ein Magnesiumoxid ist und die dritte Komponente C eine Magnesiumsulfat oder -chloridlösung bei 32°Be (bei 15°) ist.

2. Verfahren nach Anspruch 1, wobei es die Vorbereitung der Mischreihenfolge zum Zeitpunkt der Verwendung umfasst.

3. Verfahren nach einem der vorstehenden Ansprüche, wobei es weiter umfasst, das Bindemittel zu einer bekannten Menge an zu bindenden Teilchen zuzugeben.

## Revendications

1. Procédé pour obtenir un liant pour la fabrication de béton ou de produits stratifiés, comprenant la séquence de mélange suivante :
- (a) mélanger ensemble préalablement 5 à 30% d'un premier composant A et 70 à 95 % d'un second composant B ;
- (b) ajouter un troisième composant C dans un rapport de 1:1 en poids au second composant B ;
- (c) ajouter de l'eau en une quantité pour former un fluide, une pâte à écoulement libre et pulvérisable ;
- Dans lequel le premier composant A est une farine de soja ; le second composant B est un oxyde de magnésium, et le troisième composant C est une solution de chlorure
de magnésium ou de sulfate de magnésium à 32°Be (à 15°).

2. Procédé selon la revendication 1, dans lequel il comprend préparer la séquence de mélange au moment de l'utilisation.

3. Procédé selon l'une quelconque des revendications précédentes, dans lequel il comprend en outre ajouter ledit liant à une quantité connue de particules à lier.
